# EUROPEAN PATENT APPLICATION

(11) **EP 4 236 128 A1**
(43) Date of publication of application: **30.08.2023**
(21) Application number: 21882151.0
(22) Date of filing: 22.10.2021
(51) Int. Cl.: H04L 1/00

(54) **METHOD FOR INDICATING CHANNEL STATE INFORMATION OF CARRIER, AND TERMINAL DEVICE**

(30) Priority: 23.10.2020 CN 202011153743
(71) Applicant: Vivo Mobile Communication Co., Ltd., Dongguan, Guangdong 523863 (CN)
(72) Inventor: BOUBACAR, Kimba Dit Adamou, Dongguan, Guangdong 523863 (CN); ZHENG, Qian, Dongguan, Guangdong 523863 (CN)
(74) Representative: Murgitroyd & Company
(86) International application number: PCT/CN2021/125723
(87) International publication number: WO 2022/083739

(57) **Abstract**

This application discloses a carrier channel state information indicating method and a terminal device, which belong to the communication field. The method includes: generating a first MAC CE, where the first MAC CE includes channel state information corresponding to one or more carrier components of a sidelink; and sending the first MAC CE to a second terminal.

## Description

### CROSS-REFERENCE

This application claims priority to Chinese Patent Application No. 202011153743.4, filed with the National Intellectual Property Office on October 23, 2020 and entitled "CARRIER CHANNEL STATE INFORMATION INDICATING METHOD AND TERMINAL DEVICE", which is incorporated herein by reference in its entirety.

### TECHNICAL FIELD

The embodiments of the present invention relate to the communication field, and in particular, to a carrier channel state information indicating method and a terminal device.

### BACKGROUND

Currently, a long term evolution (LTE) system supports a sidelink (SL). SL can also be translated as sidelink. An SL enables user equipment (UE) to communicate directly without going through a network device. In an SL, a medium access control control element (MAC CE) sent or received between UEs usually only contains channel state information (CSI) corresponding to one carrier component (CC).

When the SL is configured with carrier aggregation (CA), a MAC CE transmitted by the SL cannot represent CSI corresponding to multiple CCs.

### SUMMARY

Embodiments of the present application provide a carrier channel state information indicating method and a terminal device, which can solve the problem that a MAC CE transmitted by an SL cannot represent CSI corresponding to multiple CCs.

In a first aspect, a carrier channel state information indicating method is provided, the method is performed by a first terminal device, and the method includes: generating a first MAC CE, where the first MAC CE includes channel state information corresponding to one or more carrier components of a sidelink; and sending the first MAC CE to a second terminal.

In a second aspect, a carrier channel state information indicating method is provided, the method is performed by a second terminal device, and the method includes: receiving a first MAC CE sent by a first terminal, where the first MAC CE includes channel state information corresponding to one or more carrier components of a sidelink; and determining, according to the first MAC CE, the channel state information corresponding to the one or more carrier components.

In a third aspect, a carrier channel state information indicating apparatus is provided, including: a generation module, configured to generate a first MAC CE, where the first MAC CE includes channel state information corresponding to one or more carrier components of a sidelink; and a sending module, configured to send the first MAC CE to a second terminal.

In a fourth aspect, a carrier channel state information indicating apparatus is provided, including: a receiving module, configured to receive a first MAC CE sent by a first terminal, where the first MAC CE includes channel state information corresponding to one or more carrier components of a sidelink; and a determining module, configured to determine, according to the first MAC CE, the channel state information corresponding to the one or more carrier components.

In a fifth aspect, a terminal device is provided. The terminal device includes a processor, a memory, and a program or an instruction stored in the memory and executable on the processor, where when the program or the instruction is executed by the processor, the steps of the method in the first aspect or the second aspect are implemented.

According to a sixth aspect, a readable storage medium is provided. The readable storage medium stores a program or an instruction, and when the program or the instruction is executed by a processor, the steps of the method in the first aspect or the second aspect are implemented.

In a seventh aspect, a computer program product is provided. The computer program product includes a processor, a memory, and a program or an instruction stored in the memory and executable on the processor, where when the program or the instruction is executed by the processor, the steps of the method in the first aspect or the second aspect are implemented.

In an eighth aspect, a chip is provided. The chip includes a processor and a communications interface, where the communications interface is coupled to the processor, and the processor is configured to execute a program or an instruction, to implement the steps of the method in the first aspect or the second aspect.

The embodiment of the present invention provides a carrier channel state information indicating method and a terminal device, the first MAC CE is generated, where the first MAC CE includes channel state information corresponding to one or more carrier components of the sidelink; and the first MAC CE is sent to the second terminal, which can solve the problem that the MAC CE transmitted by the SL cannot represent CSI corresponding to multiple CCs.

### BRIEF DESCRIPTION OF DRAWINGS

The accompanying drawings described herein are intended to provide a further understanding of the present invention, and constitute a part of the present invention. The illustrative embodiments of the present invention and descriptions thereof are intended to describe the present invention, and do not constitute limitations on the present invention. In the accompanying drawings:
FIG. 1 is a block diagram of a wireless communications system to which an embodiment of this application can be applied;
FIG. 2 is a schematic flowchart of a carrier channel state information indicating method according to an embodiment of the present invention;
FIG. 3a is a schematic flowchart of a carrier channel state information indicating method according to another embodiment of the present invention;
FIG. 3b is a schematic diagram of a first MAC CE;
FIG. 4a is a schematic flowchart of a carrier channel state information indicating method according to an embodiment of the present invention;
FIG. 4b to FIG. 4e are other schematic diagrams of a first MAC CE;
FIG. 5 is a schematic flowchart of a carrier channel state information indicating method according to an embodiment of the present invention;
FIG. 6a to FIG. 6b are other schematic diagrams of a first MAC CE;
FIG. 7 is a schematic flowchart of a carrier channel state information indicating method according to another embodiment of the present invention;
FIG. 8 is a schematic flowchart of a carrier channel state information indicating method according to another embodiment of the present invention;
FIG. 9 is a schematic structural diagram of a carrier channel state information indicating apparatus according to another embodiment of the present invention;
FIG. 10 is a schematic structural diagram of a carrier channel state information indicating according to another embodiment of the present invention; and
FIG. 11 is a schematic structural diagram of hardware of a terminal device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the data used in this way is interchangeable in appropriate circumstances so that the embodiments of this application described can be implemented in other orders than the order illustrated or described herein. In addition, in the specification and the claims, "and/or" represents at least one of connected objects, and a character "/" generally represents an "or" relationship between associated objects.

It should be noted that the technology described in this application is not limited to a Long Term Evolution (Long Time Evolution, LTE)/LTE-advanced (LTE-Advanced, LTE-A) system, and may also be used in other wireless communication systems, for example, Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), and Single-carrier Frequency-Division Multiple Access (Single-carrier Frequency-Division Multiple Access, SC-FDMA). The terms "system" and "network" in the embodiments of this application may be used interchangeably. The described technologies can be applied to both the systems and the radio technologies mentioned above as well as to other systems and radio technologies. However, a new radio (NR) system is described in the following description for illustrative purposes, and the NR terminology is used in most of the following description, although these technologies can also be applied to applications other than the NR system application, such as the 6^{th} generation (6G) communication system.

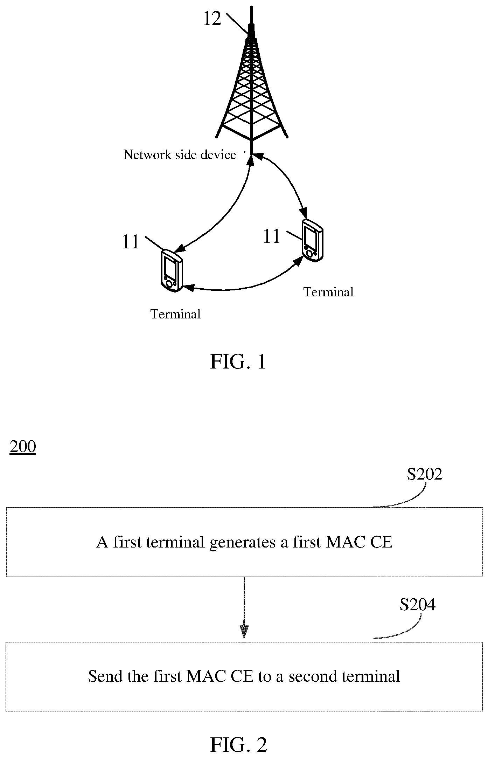

FIG. 1 is a block diagram of a wireless communications system to which embodiments of this application can be applied. The wireless communications system includes a terminal 11 and a network side device 12. The terminal 11 may also be called a terminal device or user equipment (UE), and the terminal 11 may be a mobile phone, a tablet personal computer (Tablet Personal Computer), a laptop computer (Laptop Computer) or a notebook computer, a personal digital Assistant (PDA), a palmtop computer, a netbook, an ultra-mobile personal computer (UMPC), a mobile Internet device (MID), a wearable device (Wearable Device) or a vehicle-mounted device (VUE), a pedestrian terminal (PUE), and other terminal side devices. The wearable device includes: bracelets, earphones, glasses, etc. It should be noted that a specific type of the terminal 11 is not limited in the embodiments of this application. The network side device 12 may be a base station or a core network. The base station may be referred to as a node B, an evolved node B, an access point, a base transceiver station (BTS), a radio base station, a radio transceiver, a basic service set (BSS), an extended service set (ESS), a node B, an evolved node B (eNB), a home node B, a home evolved node B, a WLAN access point, a WiFi node, a transmitting receiving point (TRP), or other appropriate terms in the art. As long as a same technical effect is achieved, the base station is not limited to a specified technical term. It should be noted that, in embodiments of the present application, only a base station in the NR system is used as an example, but a specific type of the base station is not limited.

With reference to the accompanying drawings, the following describes in detail the carrier channel state information indicating method in the embodiments of this application based on specific embodiments and application scenarios.

As shown in FIG. 2, an embodiment of the present invention provides a carrier channel state information indicating method 200. The method can be performed by a first terminal device. In other words, the method can be executed by software or hardware installed on the first terminal device. The method includes the following steps.

S202: A first terminal generates a first MAC CE.

The first MAC CE includes channel state information corresponding to one or more carrier components of a sidelink.

The first terminal may generate the first MAC CE, and the first MAC CE includes channel state information corresponding to multiple carrier components of the sidelink.

The first terminal may generate multiple first MAC CEs, where each first MAC CE may include channel state information corresponding to multiple carrier components of a sidelink, and send the multiple first MAC CEs to send channel state information corresponding to multiple carrier components.

S204: Send the first MAC CE to a second terminal.

The embodiment of the present invention provides a carrier channel state information indicating method, the first MAC CE is generated, where the first MAC CE includes channel state information corresponding to one or more carrier components of the sidelink; and the first MAC CE is sent to the second terminal, which can solve the problem that the MAC CE transmitted by the SL cannot represent CSI corresponding to multiple CCs.

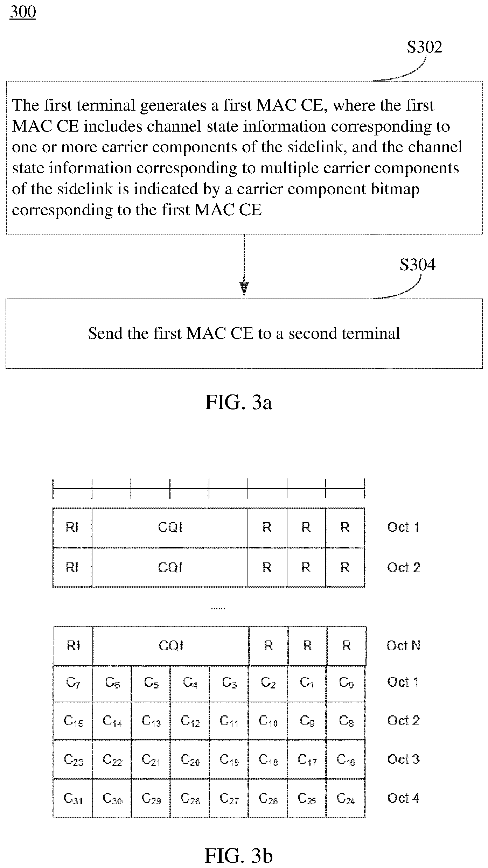

As shown in FIG. 3a, an embodiment of the present invention provides a carrier channel state information indicating method 300. The method can be performed by a first terminal device. In other words, the method can be executed by software or hardware installed on the first terminal device. The method includes the following steps.

S302: The first terminal generates a first MAC CE, where the first MAC CE includes channel state information corresponding to one or more carrier components of the sidelink, and the channel state information corresponding to multiple carrier components of the sidelink is indicated by a carrier component bitmap corresponding to the first MAC CE.

For this step, refer to the description of step S202 in the embodiment of FIG. 2, and the repeated parts will not be repeated herein.

FIG. 3b is a schematic diagram of a first MAC CE. As shown in FIG. 3b, in an implementation manner, the first MAC CE includes: a channel quality indicator (CQI) field and a carrier component bitmap corresponding to the first MAC CE.

In an implementation manner, the first bit in the carrier component bitmap corresponding to the first MAC CE is used to indicate whether a corresponding first carrier component has corresponding channel state information. The channel state information includes at least one of the CQI and the RI.

For example, C0=1 indicates that the corresponding SL CC 1 has corresponding channel state information (such as a CQI value), and C1=0 indicates that SL CC 2 has no corresponding channel state information.

In an implementation manner, the first MAC CE includes multiple CQI fields, there is a one-to-one correspondence between the CQI field and a target bit that indicates that the first carrier component has corresponding channel state information, and the CQI field corresponding to the target bit is indicated by a sequence of the target bit in the carrier component bitmap.

As shown in FIG. 3b, for example, C0=1 indicates that the corresponding SL CC 1 has a corresponding CQI value, C1=1 indicates that the corresponding SLCC 2 has a corresponding CQI value, and CO and C1 are target bits.

C2=0 indicates that the corresponding SL CC 3 has no corresponding CQI value, and C2 is not a target bit.

C3=1 indicates that the corresponding SL CC 4 has a corresponding CQI value, and C3 is the target bit.

It can be seen that the sequence of the target bits in the carrier component bitmap is: CO, Cl, C3. Then, it can be determined based on the sequence: the CQI value corresponding to the first octet Oct1 in the figure corresponds to the target bit CO, and is the CQI value of the SL CC 1 corresponding to CO; the CQI value corresponding to the second octet Oct2 in the figure corresponds to the target bit C1, and is the CQI value of the SL CC 2 corresponding to C1; and the CQI value corresponding to the third octet Oct3 (not shown in the figure ) corresponds to the target bit C3, and is the CQI value of the SL CC 4 corresponding to C3.

Similarly, in an implementation manner, the first MAC CE further includes multiple rank indicators (RI), there is a one-to-one correspondence between the RI field and a target bit that indicates that the first carrier component has corresponding channel state information, and the RI field corresponding to the target bit is indicated by a sequence of the target bit in the carrier component bitmap.

As an optional implementation manner, for one or more CCs with channel state information indicated in the bitmap, channel state information corresponding to each of the one or more CCs may be arranged in ascending order based on CC identifiers. Of course, the channel state information may also be arranged in descending order, which is not specifically limited in this embodiment.

As an optional implementation, for one or more CCs with channel state information indicated in the bitmap, each of the one or more CCs corresponds to an octet, and an octet corresponding to each CC includes channel state information (such as a CQI and/or an RI) corresponding to the CC.

Optionally, the first MAC CE may also include a reserved bit R. As another optional implementation manner, for the CCs with channel state information indicated in the bitmap, each CC corresponds to an octet, and the octet corresponding to each CC includes a reserved bit R. The number of reserved bits is not limited. For example, the first octet in FIG. 3b includes 3-bit reserved bits R, and the second octet also includes 3-bit reserved bits.

It should be noted that the MAC CE in FIG. 3b is designed to transmit channel state information of a maximum of 32 CCs, and the Ci field has four octets. Of course, if the channel state information of a maximum of 8 CCs can be transmitted, the Ci field may also have an octet, which is not specifically limited in this embodiment. In addition, one or more octets of the channel state information of the MAC CE in FIG. 3b are arranged in front of the Ci field. Of course, one or more octets of the channel state information can also be arranged behind the Ci field, which is not specifically limited in this embodiment.

S304: Send the first MAC CE to a second terminal.

The embodiment of the present invention provides a carrier channel state information indicating method, the first MAC CE is generated, where the first MAC CE includes channel state information corresponding to one or more carrier components of the sidelink; and the first MAC CE is sent to the second terminal, which can solve the problem that the MAC CE transmitted by the SL cannot represent CSI corresponding to multiple CCs.

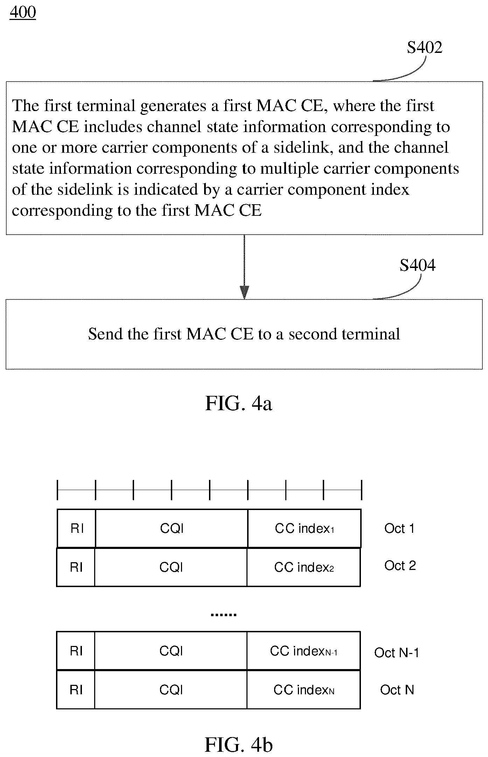

As shown in FIG. 4a, an embodiment of the present invention provides a carrier channel state information indicating method 400. The method can be performed by a first terminal device. In other words, the method can be executed by software or hardware installed on the first terminal device. The method includes the following steps.

S402: The first terminal generates a first MAC CE, where the first MAC CE includes channel state information corresponding to one or more carrier components of a sidelink, and the channel state information corresponding to multiple carrier components of the sidelink is indicated by a carrier component index corresponding to the first MAC CE.

For this step, refer to the description of step S202 in the embodiment of FIG. 2, and the repeated parts will not be repeated herein.

FIG. 4b to FIG. 4e are schematic diagrams of a first MAC CE. In an implementation manner, the first MAC CE includes a first field and a second field, the first field is used to indicate an index (such as a CC index) of a corresponding second carrier component, and the second field is used to indicate the channel state information corresponding to the index; where the channel state information includes at least one of a CQI and an RI.

In an optional implementation manner, the first field and the second field corresponding to each CC use an octet, for example, in FIG. 4b, the first field and the second field of the CC corresponding to the CC index use an octet Oct1.

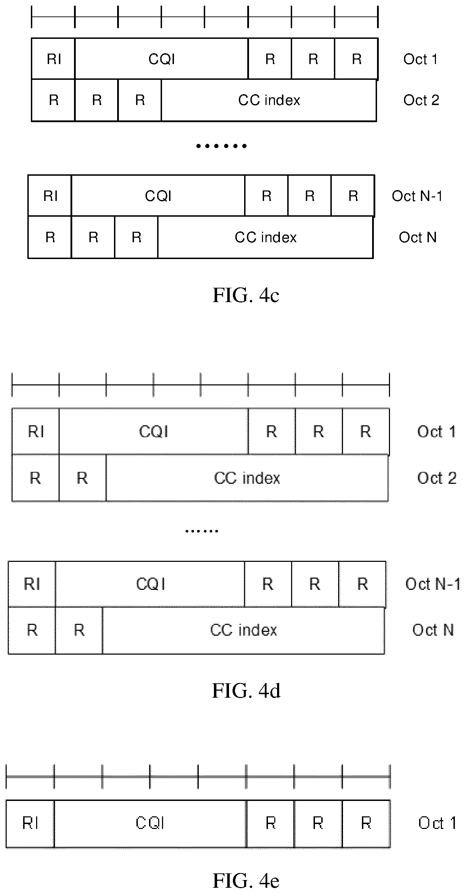

In another optional implementation manner, the first field and the second field corresponding to each CC are distributed in two octets. Optionally, the first MAC CE may also include a reserved bit R. FIG. 4c and FIG. 4d respectively show reserved bits R of different numbers of bits.

As an optional implementation manner, the channel state information is arranged in ascending order based on CC index;, and of course, may also be arranged in descending order, which is not specifically limited in this embodiment.

In another implementation manner, optionally, the first field may occupy a reserved bit R of the existing CSI MAC CE. As shown in FIG. 4e, for example, the reserved bit R is 3 bits, the reserved bit R occupied by the first field may indicate 8 CC indexes, and the correspondence may include:
000 -> CC1
001 -> CC2
010 -> CC3
011 -> CC4
100 -> CC5
101 -> CC6
110 -> CC7
111 -> CC8

In an implementation manner, a correspondence between a carrier frequency point and a carrier component index indicated by the first field is pre-configured or configured by a base station or configured by the second terminal. In an implementation manner, the correspondence is transmitted through a system message or a radio resource control RRC reconfiguration message or a sidelink RRC reconfiguration message.

Optionally, the base station configures CC index values, including carrier frequency points, for example, including fl, f2, ..., and f8, corresponding to CC1, CC2, ..., and CC8. In this case, the correspondence may be transmitted through a system message or an RRC reconfiguration message or a sidelink RRC reconfiguration message.

Optionally, the CC index value is pre-configured, including carrier frequency points, for example, f1, f2, ..., and f8, corresponding to CC1, CC2, ..., and CC8. In this case, no negotiation between the network and the SL UE is required.

Optionally, sidelink RRC configures the CC index value, including carrier frequency points, for example, f1, f2, ..., and f8, corresponding to CC1, CC2, ..., and CC8. In this case, the SL UE receives, through a sidelink RRC reconfiguration message, corresponding information sent from the peer SL UE 2. The corresponding information sent by the peer SL UE 2 may be determined by itself, or may be configured from its serving base station.

S404: Send the first MAC CE to a second terminal.

The embodiment of the present invention provides a carrier channel state information indicating method, the first MAC CE is generated, where the first MAC CE includes channel state information corresponding to one or more carrier components of the sidelink; and the first MAC CE is sent to the second terminal, which can solve the problem that the MAC CE transmitted by the SL cannot represent CSI corresponding to multiple CCs.

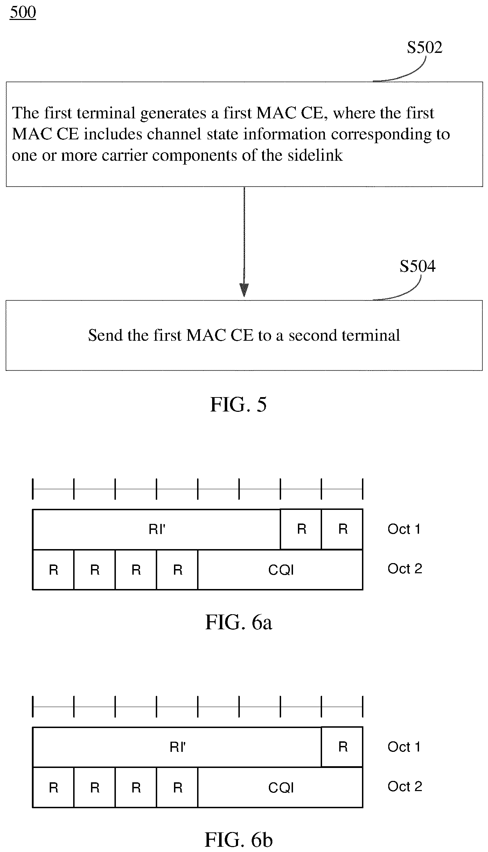

As shown in FIG. 5, an embodiment of the present invention provides a carrier channel state information indicating method 500. The method can be performed by a first terminal device. In other words, the method can be executed by software or hardware installed on the first terminal device. The method includes the following steps.

S502: The first terminal generates a first MAC CE, where the first MAC CE includes channel state information corresponding to one or more carrier components of the sidelink.

For this step, refer to the description of step S202 in the embodiment of FIG. 2, and the repeated parts will not be repeated herein.

FIG. 6a to FIG. 6b are schematic diagrams of a first MAC CE. In an implementation manner, the first MAC CE may include: a third field and a fourth field, the first bit in the third field is used to indicate a rank indicator RI of a sidelink channel state information CSI report, at least one second bit in the third field is used to indicate a carrier component index, and the fourth field is used to indicate a CQI corresponding to the index.

As shown in Fig. 6a, in an implementation manner, the third field is RI' field, and RI' field is obtained by extending the RI field to 6 bits, where a first bit in the RI' field, for example, the last bit, is used to indicate a rank indicator RI of a sidelink channel state information CSI report, that is, the meaning of the RI field, and the remaining 5 bits are used as the second bit to indicate a carrier component index CC index. Optionally, the first MAC CE may also include a reserved bit R, for example, 2-bit reserved bits R.

As shown in Fig. 6b, in an implementation manner, the third field is RI' field, and RI' field is obtained by extending the RI field to 7 bits, where a first bit in the RI' field, for example, the last bit, is used to indicate a rank indicator RI of a sidelink channel state information CSI report, and the remaining 6 bits are used as the second bit to indicate a carrier component index CC index. Optionally, the first MAC CE may also include a reserved bit R, for example, a 1 bit of reserved bit R.

S504: Send the first MAC CE to a second terminal.

The embodiment of the present invention provides a carrier channel state information indicating method, the first MAC CE is generated, where the first MAC CE includes channel state information corresponding to one or more carrier components of the sidelink; and the first MAC CE is sent to the second terminal, which can solve the problem that the MAC CE transmitted by the SL cannot represent CSI corresponding to multiple CCs.

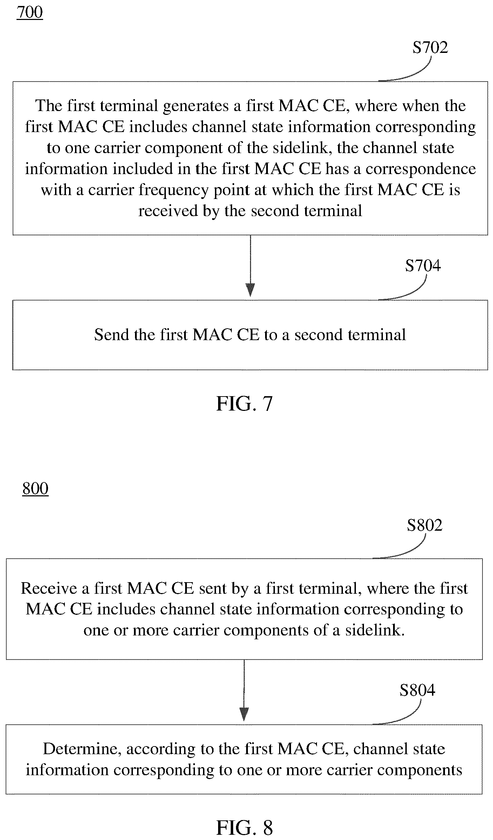

As shown in FIG. 7, an embodiment of the present invention provides a carrier channel state information indicating method 700. The method can be performed by a first terminal device. In other words, the method can be executed by software or hardware installed on the first terminal device. The method includes the following steps.

S702: The first terminal generates a first MAC CE, where when the first MAC CE includes channel state information corresponding to one carrier component of the sidelink, the channel state information included in the first MAC CE has a correspondence with a carrier frequency point at which the first MAC CE is received by the second terminal.

For this step, refer to the description of step S202 in the embodiment of FIG. 2, and the repeated parts will not be repeated herein.

S704: Send the first MAC CE to a second terminal.

Thus, after receiving the first MAC CE, the second terminal can determine, according to a carrier frequency point used to receive the first MAC CE, the channel state information included in the first MAC CE.

The embodiment of the present invention provides a carrier channel state information indicating method, the first MAC CE is generated, where the first MAC CE includes channel state information corresponding to one or more carrier components of the sidelink; and the first MAC CE is sent to the second terminal, which can solve the problem that the MAC CE transmitted by the SL cannot represent CSI corresponding to multiple CCs.

The carrier channel state information indicating method according to embodiments of the present invention has been described in detail above with reference to FIG. 2 to FIG. 7. A carrier channel state information indicating method according to another embodiment of the present invention will be described in detail below with reference to FIG. 8. It can be understood that the interaction between the second terminal device and the first terminal device described from the second terminal device side is the same as or corresponds to the description on the first terminal device side in the methods shown in FIG. 2 to FIG. 7. To avoid repetition, Relevant descriptions are omitted appropriately.

FIG. 8 is a schematic diagram of an implementation flow of a carrier channel state information indicating method according to an embodiment of the present invention, which can be applied on the network device side. As shown in FIG. 8, the method 800 includes the following steps.

S802: Receive a first MAC CE sent by a first terminal, where the first MAC CE includes channel state information corresponding to one or more carrier components of a sidelink.

For this step, refer to the description corresponding to at least one of steps S202, S302, S402, S502, S602, and S702, and details are not repeated herein.

S804: Determine, according to the first MAC CE, channel state information corresponding to one or more carrier components.

For this step, refer to the description corresponding to at least one of steps S204, S304, S404, S504, S604, and S704, and details are not repeated herein.

The embodiment of the present invention provides a carrier channel state information indicating method, the first MAC CE is generated, where the first MAC CE includes channel state information corresponding to one or more carrier components of the sidelink; and the first MAC CE is sent to the second terminal, which can solve the problem that the MAC CE transmitted by the SL cannot represent CSI corresponding to multiple CCs.

It should be noted that, the carrier channel state information indicating method provided in the embodiments of the present application may be performed by a carrier channel state information indicating apparatus, or a control module in the apparatus configured to perform and load the above method. In the embodiments of the present application, the carrier channel state information indicating method provided by the embodiments of the present application is described by using an example in which the carrier channel state information indicating method is performed by the carrier channel state information indicating apparatus.

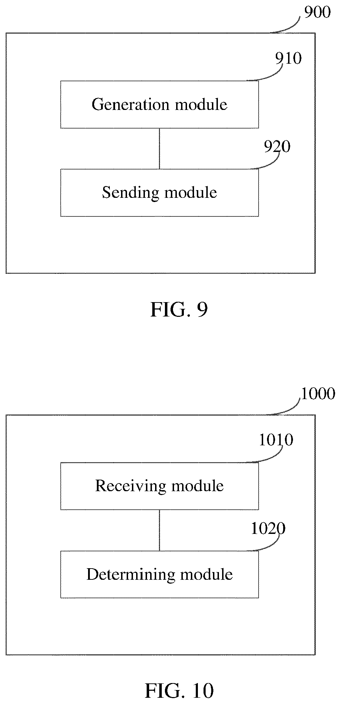

FIG. 9 is a schematic structural diagram of a carrier channel state information indicating apparatus according to an embodiment of the present invention. As shown in FIG. 9, a carrier channel state information indicting apparatus 900 includes: a generation module 910 and a sending module 920. The generation module 910 is configured to generate a first MAC CE, where the first MAC CE includes channel state information corresponding to one or more carrier components of a sidelink. The sending module 920 is configured to send the first MAC CE to a second terminal.

In an implementation manner, the channel state information corresponding to the multiple carrier components of the sidelink is indicated by a carrier component bitmap corresponding to the first MAC CE.

In an implementation manner, the first bit in the carrier component bitmap corresponding to the first MAC CE is used to indicate whether a corresponding first carrier component has corresponding channel state information, where the channel state information includes at least one of a channel quality indicator CQI and a rank indicator RI.

In an implementation manner, the first MAC CE includes multiple CQI fields, there is a one-to-one correspondence between the CQI field and a target bit that indicates that the first carrier component has corresponding channel state information, and the CQI field corresponding to the target bit is indicated by a sequence of the target bit in the carrier component bitmap.

In an implementation manner, the first MAC CE further includes multiple RI fields, there is a one-to-one correspondence between the RI field and a target bit that indicates that the first carrier component has corresponding channel state information, and the RI field corresponding to the target bit is indicated by a sequence of the target bit in the carrier component bitmap.

In an implementation manner, the channel state information corresponding to the multiple carrier components of the sidelink is indicated by a carrier component index corresponding to the first MAC CE.

In an implementation manner, the first MAC CE includes a first field and a second field, the first field is used to indicate an index of a corresponding second carrier component, and the second field is used to indicate the channel state information corresponding to the index; where the channel state information includes at least one of a CQI and an RI.

In an implementation manner, the first MAC CE further includes a reserved bit.

In an implementation manner, a correspondence between a carrier frequency point and a carrier component index indicated by the first field is pre-configured or configured by a base station or configured by the second terminal.

In an implementation manner, the correspondence is transmitted through a system message or an RRC reconfiguration message or a sidelink RRC reconfiguration message.

In an implementation manner, the first MAC CE includes: a third field and a fourth field, the first bit in the third field is used to indicate a rank indicator RI of a sidelink channel state information CSI report, at least one second bit in the third field is used to indicate a carrier component index, and the fourth field is used to indicate a CQI corresponding to the index.

In an implementation manner, in a case that the first MAC CE includes channel state information corresponding to one carrier component of the sidelink, the channel state information included in the first MAC CE has a correspondence with a carrier frequency point at which the first MAC CE is received by the second terminal.

The carrier channel state information indicating apparatus in the embodiments of the present application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a laptop computer, a palmtop computer, an in-vehicle terminal, a wearable device, an ultra-mobile personal computer (UMPC), a netbook, or a personal digital assistant (PDA). The non-mobile electronic device may be a server, a network attached storage (NAS), a personal computer (PC), a television (TV), an automated teller machine or a self-service machine. This is not specifically limited in the embodiments of the present application.

The carrier channel state information indicating apparatus in the embodiments of the present application may be an apparatus with an operating system. The operating system may be an Android (Android) operating system, an iOS operating system, or another possible operating system. This is not specifically limited in the embodiments of this application.

For the apparatus 900 according to the embodiments of the present invention, refer to the flow of the methods 200 to 700 corresponding to the embodiments of the present invention, and each unit/module in the apparatus 900 and the above-mentioned other operations and/or functions are respectively used to realize the corresponding process in the methods 200 to 700 and can achieve the same or equivalent technical effect. For brevity, no more details are given herein.

FIG. 10 is a schematic structural diagram of a carrier channel state information indicating apparatus according to an embodiment of the present invention. As shown in FIG. 10, a carrier channel state information indicating apparatus 1000 includes: a receiving module 1010 and a determining module 1020. The receiving module 1010 is configured to receive a first MAC CE sent by a first terminal, where the first MAC CE includes channel state information corresponding to one or more carrier components of a sidelink. The determining module 1020 is configured to determine, according to the first MAC CE, channel state information corresponding to one or more carrier components. The channel state information corresponding to the multiple carrier components of the sidelink is indicated by a carrier component bitmap corresponding to the first MAC CE.

In an implementation manner, the first bit in the carrier component bitmap corresponding to the first MAC CE is used to indicate whether a corresponding first carrier component has corresponding channel state information, where the channel state information includes at least one of a channel quality indicator CQI and a rank indicator RI.

In an implementation manner, the first MAC CE includes multiple CQI fields, there is a one-to-one correspondence between the CQI field and a target bit that indicates that the first carrier component has corresponding channel state information, and the CQI field corresponding to the target bit is indicated by a sequence of the target bit in the carrier component bitmap.

In an implementation manner, the first MAC CE further includes multiple RI fields, there is a one-to-one correspondence between the RI field and a target bit that indicates that the first carrier component has corresponding channel state information, and the RI field corresponding to the target bit is indicated by a sequence of the target bit in the carrier component bitmap.

In an implementation manner, the channel state information corresponding to the multiple carrier components of the sidelink is indicated by a carrier component index corresponding to the first MAC CE.

In an implementation manner, the first MAC CE includes a first field and a second field, the first field is used to indicate an index of a corresponding second carrier component, and the second field is used to indicate the channel state information corresponding to the index; where the channel state information includes at least one of a CQI and an RI.

In an implementation manner, the first MAC CE further includes a reserved bit.

In an implementation manner, a correspondence between a carrier frequency point and a carrier component index indicated by the first field is pre-configured or configured by a base station or configured by the second terminal.

In an implementation manner, the correspondence is transmitted through a system message or an RRC reconfiguration message or a sidelink RRC reconfiguration message.

In an implementation manner, the first MAC CE includes: a third field and a fourth field, the first bit in the third field is used to indicate a rank indicator RI of a sidelink channel state information CSI report, at least one second bit in the third field is used to indicate a carrier component index, and the fourth field is used to indicate a CQI corresponding to the index.

In an implementation manner, in a case that the first MAC CE includes channel state information corresponding to one carrier component of the sidelink, the channel state information included in the first MAC CE has a correspondence with a carrier frequency point at which the first MAC CE is received by the second terminal.

The carrier channel state information indicating apparatus in the embodiments of the present application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a laptop computer, a palmtop computer, an in-vehicle terminal, a wearable device, an ultra-mobile personal computer (UMPC), a netbook, or a personal digital assistant (PDA). The non-mobile electronic device may be a server, a network attached storage (NAS), a personal computer (PC), a television (TV), an automated teller machine or a self-service machine. This is not specifically limited in the embodiments of the present application.

The carrier channel state information indicating apparatus in the embodiments of the present application may be an apparatus with an operating system. The operating system may be an Android (Android) operating system, an iOS operating system, or another possible operating system. This is not specifically limited in the embodiments of this application.

For the apparatus 1000 in this embodiment of the present invention, reference may be made to a procedure corresponding to method 800 in embodiments of the present invention. In addition, units/modules in the apparatus 1000 and other operations and/or functions are respectively used to implement corresponding procedures in the method 800, and a same or equivalent technical effect can be achieved. For brevity, details are not described herein again.

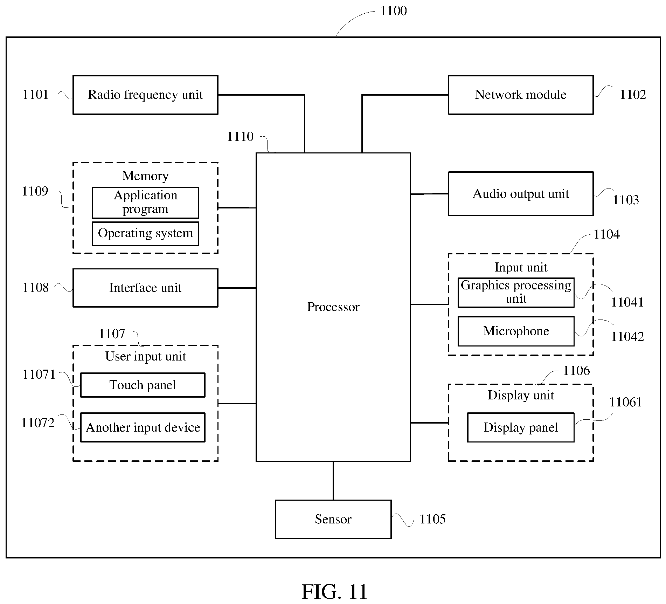

FIG. 11 is a schematic structural diagram of hardware of a terminal device according to an embodiment of this application.

A terminal device 1100 includes but is not limited to components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

It can be understood by a person skilled in the art that the terminal device 1100 may further include a power supply (such as a battery) that supplies power to each component. The power supply may be logically connected to the processor 1110 by using a power management system, to implement functions such as charging, discharging, and power consumption management by using the power management system. The terminal device structure shown in the figure does not constitute any limitation on the terminal device, and the terminal device may include more or fewer components than those shown in the figure, or combine some components, or have different component arrangements. Details are not described herein.

It should be understood that, in this embodiment of this application, the input unit 1104 may include a graphics processing unit (Graphics Processing Unit, GPU) 11041 and a microphone 11042, and the graphics processing unit 11041 processes image data of a still picture or a video obtained by an image capture apparatus (such as a camera) in a video capture mode or an image capture mode. The display unit 1106 may include a display panel 11061. The display panel 11061 may be configured in a form such as a liquid crystal display or an organic light-emitting diode. The user input unit 1107 includes a touch panel 11071 and another input device 11072. The touch panel 11071 is also referred to as a touchscreen. The touch panel 11071 may include two parts: a touch detection apparatus and a touch controller. The another input device 11072 may include, but is not limited to, a physical keyboard, function keys (such as a volume control key and a switch key), a trackball, a mouse, and a joystick. Details are not described herein.

In this embodiment of this application, the radio frequency unit 1101 receives downlink data from a network side device and then sends the downlink data to the processor 1110 for processing; and sends uplink data to the network side device. Usually, the radio frequency unit 1101 includes but is not limited to an antenna, at least one amplifier, a transceiver, a coupler, a low noise amplifier, a duplexer, and the like.

The memory 1109 may be configured to store a software program or an instruction and various pieces of data. The memory 1109 may mainly include a program or instruction storage area and a data storage area. The program or instruction storage area may store an operating system, and an application program or an instruction required by at least one function (for example, a sound playing function or an image playing function). In addition, the memory 1109 may include a high-speed random access memory, and may also include a non-volatile memory. The non-volatile memory may be a read-only memory (ROM), a programmable read-only memory (PROM), an erasable programmable read-only memory (Erasable PROM, EPROM), an electrically erasable programmable read-only memory (Electrically EPROM, EEPROM) or a flash memory, for example, at least one disk storage component, a flash memory component, or another non-volatile solid-state storage component.

The processor 1110 may include one or more processing units. Optionally, an application processor and a modem processor may be integrated into the processor 1110. The application processor mainly processes an operating system, a user interface, an application, an instruction, or the like. The modem processor mainly processes wireless communications, for example, a baseband processor. It can be understood that, alternatively, the modem processor may not be integrated into the processor 1110.

The processor 1110 is configured to: generate a first MAC CE, where the first MAC CE includes channel state information corresponding to one or more carrier components of a sidelink; and sending the first MAC CE to a second terminal.

In an implementation manner, the channel state information corresponding to the multiple carrier components of the sidelink is indicated by a carrier component bitmap corresponding to the first MAC CE.

In an implementation manner, the first bit in the carrier component bitmap corresponding to the first MAC CE is used to indicate whether a corresponding first carrier component has corresponding channel state information, where the channel state information includes at least one of a channel quality indicator CQI and a rank indicator RI.

In an implementation manner, the first MAC CE includes multiple CQI fields, there is a one-to-one correspondence between the CQI field and a target bit that indicates that the first carrier component has corresponding channel state information, and the CQI field corresponding to the target bit is indicated by a sequence of the target bit in the carrier component bitmap.

In an implementation manner, the first MAC CE further includes multiple RI fields, there is a one-to-one correspondence between the RI field and a target bit that indicates that the first carrier component has corresponding channel state information, and the RI field corresponding to the target bit is indicated by a sequence of the target bit in the carrier component bitmap.

In an implementation manner, the channel state information corresponding to the multiple carrier components of the sidelink is indicated by a carrier component index corresponding to the first MAC CE.

In an implementation manner, the first MAC CE includes a first field and a second field, the first field is used to indicate an index of a corresponding second carrier component, and the second field is used to indicate the channel state information corresponding to the index; where the channel state information includes at least one of a CQI and an RI.

In an implementation manner, the first MAC CE further includes a reserved bit.

In an implementation manner, a correspondence between a carrier frequency point and a carrier component index indicated by the first field is pre-configured or configured by a base station or configured by the second terminal.

In an implementation manner, the correspondence is transmitted through a system message or an RRC reconfiguration message or a sidelink RRC reconfiguration message.

In an implementation manner, the first MAC CE includes: a third field and a fourth field, the first bit in the third field is used to indicate a rank indicator RI of a sidelink channel state information CSI report, at least one second bit in the third field is used to indicate a carrier component index, and the fourth field is used to indicate a CQI corresponding to the index.

In an implementation manner, in a case that the first MAC CE includes channel state information corresponding to one carrier component of the sidelink, the channel state information included in the first MAC CE has a correspondence with a carrier frequency point at which the first MAC CE is received by the second terminal.

Alternatively, the processor 1110 is configured to receive a first MAC CE sent by a first terminal, where the first MAC CE includes channel state information corresponding to one or more carrier components of a sidelink; and
determine, according to the first MAC CE, channel state information corresponding to one or more carrier components.

In an implementation manner, the channel state information corresponding to the multiple carrier components of the sidelink is indicated by a carrier component bitmap corresponding to the first MAC CE.

In an implementation manner, the first bit in the carrier component bitmap corresponding to the first MAC CE is used to indicate whether a corresponding first carrier component has corresponding channel state information, where the channel state information includes at least one of a channel quality indicator CQI and a rank indicator RI.

In an implementation manner, the first MAC CE includes multiple CQI fields, there is a one-to-one correspondence between the CQI field and a target bit that indicates that the first carrier component has corresponding channel state information, and the CQI field corresponding to the target bit is indicated by a sequence of the target bit in the carrier component bitmap.

In an implementation manner, the first MAC CE further includes multiple RI fields, there is a one-to-one correspondence between the RI field and a target bit that indicates that the first carrier component has corresponding channel state information, and the RI field corresponding to the target bit is indicated by a sequence of the target bit in the carrier component bitmap.

In an implementation manner, the channel state information corresponding to the multiple carrier components of the sidelink is indicated by a carrier component index corresponding to the first MAC CE.

In an implementation manner, the first MAC CE includes a first field and a second field, the first field is used to indicate an index of a corresponding second carrier component, and the second field is used to indicate the channel state information corresponding to the index; where the channel state information includes at least one of a CQI and an RI. In an implementation manner, the first MAC CE further includes a reserved bit.

In an implementation manner, a correspondence between a carrier frequency point and a carrier component index indicated by the first field is pre-configured or configured by a base station or configured by the second terminal.

In an implementation manner, the correspondence is transmitted through a system message or an RRC reconfiguration message or a sidelink RRC reconfiguration message.

In an implementation manner, the first MAC CE includes: a third field and a fourth field, the first bit in the third field is used to indicate a rank indicator RI of a sidelink channel state information CSI report, at least one second bit in the third field is used to indicate a carrier component index, and the fourth field is used to indicate a CQI corresponding to the index.

In an implementation manner, in a case that the first MAC CE includes channel state information corresponding to one carrier component of the sidelink, the channel state information included in the first MAC CE has a correspondence with a carrier frequency point at which the first MAC CE is received by the second terminal.

For the terminal device 1100 according to the embodiments of the present invention, refer to the flow of the methods 200 to 700 or 800 corresponding to the embodiments of the present invention, and each unit/module in the terminal device 1100 and the above-mentioned other operations and/or functions are used to implement the methods 200 to 700 or 800, and can achieve the same or equivalent technical effect. For brevity, no more details are given herein.

An embodiment of the present application further provides a readable storage medium. The readable storage medium stores a program or an instruction, and when the program or the instruction is executed by a processor, each process of the embodiment of the foregoing carrier channel state information indicating method is performed and the same technical effects can be achieved. To avoid repetition, details are not described herein again.

The processor is a processor in the electronic device in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of the present application further provides a chip, the chip includes a processor and a communication interface, the communication interface is coupled to the processor, and the processor is configured to execute a program or instructions to implement each process of the embodiment of the foregoing carrier channel state information indicating method and the same technical effects can be achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a computer program product. The computer program product includes a processor, a memory, and a program or an instruction stored in the memory and executable on the processor, where when the program or the instruction is executed by the processor, the steps of the method in the first aspect are implemented.

It should be noted that in this specification, the term "include", "comprise", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. An element limited by "includes a ..." does not, without more constraints, preclude the presence of additional identical elements in the process, method, article, or apparatus that includes the element. In addition, it should be noted that the scope of the methods and apparatuses in the embodiments of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, a network device, or the like) to perform the methods described in the embodiments of this application.

The embodiments of this application are described above with reference to the accompanying drawings, but this application is not limited to the foregoing specific implementation manners. The foregoing specific implementation manners are merely schematic instead of restrictive. Under enlightenment of this application, a person of ordinary skills in the art may make many forms without departing from aims and the protection scope of claims of this application, all of which fall within the protection scope of this application.

## Claims

1. A carrier channel state information indicating method, the method being performed by a first terminal device, the method comprising:
generating a first MAC CE, wherein the first MAC CE comprises channel state information corresponding to one or more carrier components of a sidelink; and
sending the first MAC CE to a second terminal.

2. The method according to claim 1, wherein the channel state information corresponding to multiple carrier components of the sidelink is indicated by a carrier component bitmap corresponding to the first MAC CE.

3. The method according to claim 1, wherein a first bit in a carrier component bitmap corresponding to the first MAC CE is used to indicate whether a corresponding first carrier component has corresponding channel state information, wherein the channel state information comprises at least one of a channel quality indicator CQI and a rank indicator RI.

4. The method according to claim 3, wherein the first MAC CE comprises multiple CQI fields, there is a one-to-one correspondence between a CQI field and a target bit that indicates that the first carrier component has corresponding channel state information, and the CQI field corresponding to the target bit is indicated by a sequence of the target bit in the carrier component bitmap.

5. The method according to claim 3, wherein the first MAC CE further comprises multiple RI fields, there is a one-to-one correspondence between a RI field and a target bit that indicates that the first carrier component has corresponding channel state information, and the RI field corresponding to the target bit is indicated by a sequence of the target bit in the carrier component bitmap.

6. The method according to claim 1, wherein the channel state information corresponding to multiple carrier components of the sidelink is indicated by a carrier component index corresponding to the first MAC CE.

7. The method according to claim 1, wherein the first MAC CE comprises a first field and a second field, the first field is used to indicate an index of a corresponding second carrier component, and the second field is used to indicate channel state information corresponding to the index; wherein the channel state information comprises at least one of a CQI and an RI.

8. The method according to claim 3 or 7, wherein the first MAC CE further comprises a reserved bit.

9. The method according to claim 7, wherein a correspondence between a carrier frequency point and a carrier component index indicated by the first field is pre-configured or configured by a base station or configured by the second terminal.

10. The method according to claim 9, wherein the correspondence is transmitted through a system message or an RRC reconfiguration message or a sidelink RRC reconfiguration message.

11. The method according to claim 1, wherein the first MAC CE comprises: a third field and a fourth field, a first bit in the third field is used to indicate a rank indicator RI of a sidelink channel state information CSI report, at least one second bit in the third field is used to indicate a carrier component index, and the fourth field is used to indicate a CQI corresponding to the index.

12. The method according to claim 1, wherein in a case that the first MAC CE comprises channel state information corresponding to one carrier component of the sidelink, the channel state information comprised in the first MAC CE has a correspondence with a carrier frequency point at which the first MAC CE is received by the second terminal.

13. A carrier channel state information indicating method, the method being performed by a second terminal device, the method comprising:
receiving a first MAC CE sent by a first terminal, wherein the first MAC CE comprises channel state information corresponding to one or more carrier components of a sidelink; and
determining, according to the first MAC CE, channel state information corresponding to one or more carrier components.

14. The method according to claim 13, wherein the channel state information corresponding to multiple carrier components of the sidelink is indicated by a carrier component bitmap corresponding to the first MAC CE.

15. The method according to claim 13, wherein a first bit in a carrier component bitmap corresponding to the first MAC CE is used to indicate whether a corresponding first carrier component has corresponding channel state information, wherein the channel state information comprises at least one of a channel quality indicator CQI and a rank indicator RI.

16. The method according to claim 15, wherein the first MAC CE comprises multiple CQI fields, there is a one-to-one correspondence between a CQI field and a target bit that indicates that the first carrier component has corresponding channel state information, and the CQI field corresponding to the target bit is indicated by a sequence of the target bit in the carrier component bitmap.

17. The method according to claim 15, wherein the first MAC CE further comprises multiple RI fields, there is a one-to-one correspondence between a RI field and a target bit that indicates that the first carrier component has corresponding channel state information, and the RI field corresponding to the target bit is indicated by a sequence of the target bit in the carrier component bitmap.

18. The method according to claim 13, wherein the channel state information corresponding to multiple carrier components of the sidelink is indicated by a carrier component index corresponding to the first MAC CE.

19. The method according to claim 13, wherein the first MAC CE comprises a first field and a second field, the first field is used to indicate an index of a corresponding second carrier component, and the second field is used to indicate channel state information corresponding to the index; wherein the channel state information comprises at least one of a CQI and an RI.

20. The method according to claim 15 or 19, wherein the first MAC CE further comprises a reserved bit.

21. The method according to claim 19, wherein a correspondence between a carrier frequency point and a carrier component index indicated by the first field is pre-configured or configured by a base station or configured by the second terminal.

22. The method according to claim 21, wherein the correspondence is transmitted through a system message or an RRC reconfiguration message or a sidelink RRC reconfiguration message.

23. The method according to claim 13, wherein the first MAC CE comprises: a third field and a fourth field, a first bit in the third field is used to indicate a rank indicator RI of a sidelink channel state information CSI report, at least one second bit in the third field is used to indicate a carrier component index, and the fourth field is used to indicate a CQI corresponding to the index.

24. The method according to claim 13, wherein in a case that the first MAC CE comprises channel state information corresponding to one carrier component of the sidelink, the channel state information comprised in the first MAC CE has a correspondence with a carrier frequency point at which the first MAC CE is received by the second terminal.

25. A carrier channel state information indicating apparatus, comprising:
a generation module, configured to generate a first MAC CE, wherein the first MAC CE comprises channel state information corresponding to one or more carrier components of a sidelink; and
a sending module, configured to send the first MAC CE to a second terminal.

26. A carrier channel state information indicating apparatus, comprising:
a receiving module, configured to receive a first MAC CE sent by a first terminal, wherein the first MAC CE comprises channel state information corresponding to one or more carrier components of a sidelink; and
a determining module, configured to determine, according to the first MAC CE, channel state information corresponding to one or more carrier components.

27. A terminal device, comprising a processor, a memory, and a program or an instruction stored in the memory and executable on the processor, wherein when the program or the instruction is executed by the processor, steps of the carrier channel state information indicating method according to any one of claims 1 to 12 are implemented; or
steps of the carrier channel state information indicating method according to any one of claims 13 to 24 are implemented.

28. A readable storage medium, storing a program or an instruction, wherein when the program or the instruction is executed by a processor, steps of the carrier channel state information indicating method according to any one of claims 1 to 12 are implemented; or
steps of the carrier channel state information indicating method according to any one of claims 13 to 24 are implemented.
